# EUROPEAN PATENT SPECIFICATION

(11) **EP 4 484 019 B1**
(45) Date of publication and mention of the grant of the patent: **11.11.2026**
(21) Application number: 23780657.5
(22) Date of filing: 29.03.2023
(51) Int. Cl.: B05C 11/00, B05B 12/00, B05D 1/26, B05D 3/00, B05D 7/00, F16F 1/02, F16F 1/12, B05B 12/12, B05B 13/04, B05C 11/10, B05C 13/02, B05D 1/00

(54) **COATING MATERIAL APPLICATION SYSTEM, CONTROL DEVICE, CONTROL METHOD, AND CONTROL PROGRAM**
BESCHICHTUNGSMATERIALAUFTRAGUNGSSYSTEM, STEUERUNGSVORRICHTUNG, STEUERUNGSVERFAHREN UND STEUERUNGSPROGRAMM
SYSTÈME D'APPLICATION DE MATÉRIAU DE REVÊTEMENT, DISPOSITIF DE COMMANDE, PROCÉDÉ DE COMMANDE ET PROGRAMME DE COMMANDE

(30) Priority: 31.03.2022 JP 2022060524
(43) Date of publication of application: 01.01.2025
(73) Proprietor: NHK Spring Co., Ltd., Yokohama-shi, Kanagawa 236-0004 (JP)
(72) Inventor: KANO, Takahiro, Yokohama-shi, Kanagawa 236-0004 (JP); UCHIDA, Yasuhide, Yokohama-shi, Kanagawa 236-0004 (JP); NAKANO, Shota, Yokohama-shi, Kanagawa 236-0004 (JP); INABA, Gai, Yokohama-shi, Kanagawa 236-0004 (JP)
(74) Representative: Hoffmann Eitle
(86) International application number: PCT/JP2023/012743
(87) International publication number: WO 2023/190648

(56) References cited:
- JP-A- 2006 231 099
- JP-A- 2007 308 067
- JP-A- 2007 308 067
- JP-A- 2010 179 231
- JP-A- 2017 180 537
- US-A1- 2005 058 768
- US-A1- 2006 073 265
- US-A1- 2010 003 396

## Description

### Field

The present disclosure relates to a coating material application system, a control device, a control method, and a control program.

### Background

Thus far, the following application method has been known as a method for applying a coating material to a coil spring (see, for example, Patent Literature 1).

In the application method described in Patent Literature 1, a coil spring is rotated about the center axis of the coil spring, and a powder coating gun is moved along the center axis in synchronization with the rotation; thereby, the powder coating gun is always made to face the strand of the coil spring.

### Citation List

### Patent Literature

Patent Literature 1: JP 2007-308067 A

### Summary

### Technical Problem

However, in the application method described in Patent Literature 1, the powder coating gun is moved in synchronization with the rotation of the coil spring on the assumption that the coil spring has a desired design shape. Hence, in cases such as where the tolerance of the coil spring is large, there is a problem that the position of application to the coil spring by the powder coating gun deviates from a desired position and the coating material cannot be applied to the coil spring with high accuracy.

The present invention has been made in view of the above, and an object of the present invention is to provide a coating material application system, a control device, a control method, and a control program capable of applying a coating material to a coil spring with high accuracy.

### Solution to Problem

To solve the above-described problem and achieve the object, a coating material application system according to the present invention includes: a support base configured to support a coil spring, the support base being rotatable about a specific axis following a center axis of the coil spring; a sensor configured to measure a position of a strand of the coil spring; a first movement device configured to support the sensor and move the sensor; an application device configured to apply a coating material to the coil spring; a second movement device configured to support the application device and move the application device; and a control device configured to control operations of the support base, the sensor, the first movement device, the application device and the second movement device, the control device including: a support base control unit configured to rotate the support base about the specific axis; a sensor control unit configured to operate the sensor and acquire a measurement value of the sensor; a first movement control unit configured to operate the first movement device and move the sensor; a position-of-application calculation unit configured to calculate, based on a measurement value of the sensor, a position of application of the coating material to the coil spring; a second movement control unit configured to operate the second movement device and move the application device to a position where the application device is caused to apply the coating material to the position of application; and an application device control unit configured to operate the application device and cause the application device to apply the coating material to the position of application. The position-of-application calculation unit is configured to calculate, based on the measurement value of the sensor, a position where portions of the strand come into contact with each other when the coil spring is compressed as the position of application.

Moreover, in the above-described coating material application system according to the present invention, a position of measurement of a position of the strand of the coil spring by the sensor and the position of application are shifted from each other by a specific angle about the specific axis.

Moreover, in the above-described coating material application system according to the present invention, the specific angle is 180°.

Moreover, in the above-described coating material application system according to the present invention, the position-of-application calculation unit is configured to calculate, based on a measurement value of the sensor, a first set of position coordinates that is to be the position of application when rotation is made by the specific angle about the specific axis, and then calculate, as the position of application, a second set of position coordinates that is a result of rotation of the first set of position coordinates by the specific angle about the specific axis.

Moreover, in the above-described coating material application system according to the present invention, the application device control unit is configured to cause the application device to apply the coating material to the position of application at an application timing at which the support base is rotated by the specific angle about the specific axis from a timing of measurement of the position of the strand of the coil spring by the sensor.

Moreover, in the above-described coating material application system according to the present invention, the first movement device is a movement device configured to move the sensor only along the specific axis, and the second movement device is a movement device configured to move the application device only along the specific axis and an axis orthogonal to the specific axis.

Moreover, in the above-described coating material application system according to the present invention, the sensor is configured to emit linear laser light, receive the laser light reflected from the strand of the coil spring, and measure a profile of a part of the strand that has reflected the linear laser light.

Moreover, the above-described coating material application system according to the present invention further includes: a surface treatment device configured to perform surface treatment of the coil spring; and a third movement device configured to support the surface treatment device and move the surface treatment device, wherein the control device further includes: a position-of-surface-treatment calculation unit configured to calculate, based on a measurement value of the sensor, a position of surface treatment that is located at an earlier stage in a rotation direction of the coil spring about the specific axis than the position of application and where surface treatment is performed on the coil spring; a third movement control unit configured to operate the third movement device and move the surface treatment device to a position where the surface treatment device is caused to perform surface treatment of the position of surface treatment; and a surface treatment device control unit configured to operate the surface treatment device and cause the surface treatment device to perform surface treatment of the position of surface treatment before applying the coating material to the position of application.

Moreover, a control device according to the present invention includes: a support base control unit configured to rotate a support base about a specific axis following a center axis of a coil spring, the support base being configured to support the coil spring; a sensor control unit configured to operate a sensor and acquire a measurement value of the sensor, the sensor being configured to measure a position of a strand of the coil spring; a first movement control unit configured to operate a first movement device and move the sensor, the first movement device being configured to support the sensor and move the sensor; a position-of-application calculation unit configured to calculate, based on a measurement value of the sensor, a position of application of a coating material to the coil spring; a second movement control unit configured to operate a second movement device and move an application device to a position where the application device is caused to apply the coating material to the position of application, the second movement device being configured to support the application device and move the application device, the application device being configured to apply the coating material to the coil spring; and an application device control unit configured to operate the application device and cause the application device to apply the coating material to the position of application. The position-of-application calculation unit is configured to calculate, based on the measurement value of the sensor, a position where portions of the strand come into contact with each other when the coil spring is compressed as the position of application.

Moreover, the above-described control device according to the present invention further includes: a position-of-surface-treatment calculation unit configured to calculate, based on a measurement value of the sensor, a position of surface treatment that is located at an earlier stage in a rotation direction of the coil spring about the specific axis than the position of application and where surface treatment is performed on the coil spring; a third movement control unit configured to operate a third movement device and move a surface treatment device to a position where the surface treatment device is caused to perform surface treatment of the position of surface treatment, the third movement device being configured to support the surface treatment device and move the surface treatment device, the surface treatment device being configured to perform surface treatment of the coil spring; and a surface treatment device control unit configured to operate the surface treatment device and cause the surface treatment device to perform surface treatment of the position of surface treatment before applying the coating material to the position of application.

Moreover, a control method according to the present invention executed by a control device of a coating material application system includes: a support base control step of rotating a support base about a specific axis following a center axis of a coil spring, the support base being configured to support the coil spring; a sensor control step of operating a sensor and acquiring a measurement value of the sensor, the sensor being configured to measure a position of a strand of the coil spring; a first movement control step of operating a first movement device and moving the sensor, the first movement device being configured to support the sensor and move the sensor; a position-of-application calculation step of calculating, based on a measurement value of the sensor, a position of application of a coating material to the coil spring; a second movement control step of operating a second movement device and moving an application device to a position where the application device is caused to apply the coating material to the position of application, the second movement device being configured to support the application device and move the application device, the application device being configured to apply the coating material to the coil spring; and an application device control step of operating the application device and causing the application device to apply the coating material to the position of application. The position-of-application calculation step calculates, based on the measurement value of the sensor, a position where portions of the strand come into contact with each other when the coil spring is compressed as the position of application.

Moreover, the above-described control method according to the present invention further includes: a position-of-surface-treatment calculation step of calculating, based on a measurement value of the sensor, a position of surface treatment that is located at an earlier stage in a rotation direction of the coil spring about the specific axis than the position of application and where surface treatment is performed on the coil spring; a third movement control step of operating a third movement device and moving a surface treatment device to a position where the surface treatment device is caused to perform surface treatment of the position of surface treatment, the third movement device being configured to support the surface treatment device and move the surface treatment device, the surface treatment device being configured to perform surface treatment of the coil spring; and a surface treatment device control step of operating the surface treatment device and causing the surface treatment device to perform surface treatment of the position of surface treatment before applying the coating material to the position of application.

Moreover, a control program according to the present invention causes a computer to execute: a support base control step of rotating a support base about a specific axis following a center axis of a coil spring, the support base being configured to support the coil spring; a sensor control step of operating a sensor and acquiring a measurement value of the sensor, the sensor being configured to measure a position of a strand of the coil spring; a first movement control step of operating a first movement device and moving the sensor, the first movement device being configured to support the sensor and move the sensor; a position-of-application calculation step of calculating, based on a measurement value of the sensor, a position of application of a coating material to the coil spring; a second movement control step of operating a second movement device and moving an application device to a position where the application device is caused to apply the coating material to the position of application, the second movement device being configured to support the application device and move the application device, the application device being configured to apply the coating material to the coil spring; and an application device control step of operating the application device and causing the application device to apply the coating material to the position of application. The position-of-application calculation step calculates, based on the measurement value of the sensor, a position where portions of the strand come into contact with each other when the coil spring is compressed as the position of application.

Moreover, the above-described control program according to the present invention causes the computer to further execute: a position-of-surface-treatment calculation step of calculating, based on a measurement value of the sensor, a position of surface treatment that is located at an earlier stage in a rotation direction of the coil spring about the specific axis than the position of application and where surface treatment is performed on the coil spring; a third movement control step of operating a third movement device and moving a surface treatment device to a position where the surface treatment device is caused to perform surface treatment of the position of surface treatment, the third movement device being configured to support the surface treatment device and move the surface treatment device, the surface treatment device being configured to perform surface treatment of the coil spring; and a surface treatment device control step of operating the surface treatment device and causing the surface treatment device to perform surface treatment of the position of surface treatment before applying the coating material to the position of application. Advantageous Effects of Invention

By using the coating material application system, the control device, the control method, and the control program according to the present invention, a coating material can be applied to a coil spring with high accuracy.

### Brief Description of Drawings

FIG. 1 is a diagram illustrating a configuration of a coating material application system according to a first embodiment.
FIG. 2 is a diagram describing a positional relationship between a sensor and a dispenser.
FIG. 3 is a block diagram illustrating a configuration of a control device.
FIG. 4 is a flowchart illustrating a control method executed by the control device.
FIG. 5 is a diagram describing steps S2 and S4.
FIG. 6 is a diagram describing a configuration of a coating material application system according to a second embodiment.
FIG. 7 is a diagram describing a configuration of the coating material application system according to the second embodiment.
FIG. 8 is a flowchart illustrating a control method executed by a control device.
FIG. 9 is a diagram describing a modification example of the first and second embodiments.

### Description of Embodiments

Hereinbelow, modes for implementing the present invention (hereinafter, embodiments) are described with reference to the drawings. The present invention is not limited by the embodiments described below. In the description of the drawings, the same portions are denoted by the same reference numerals.

### (First Embodiment)

### [Rough configuration of the coating material application system]

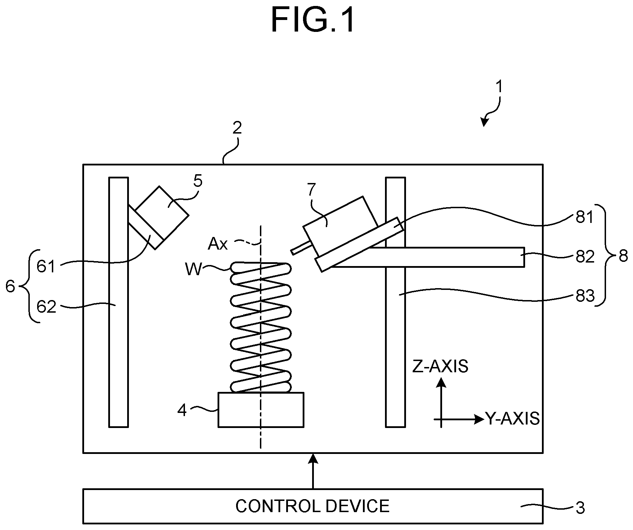

FIG. 1 is a diagram illustrating a configuration of a coating material application system 1 according to a first embodiment.

The coating material application system 1 is a system that applies a coating material to a coil spring W (FIG. 1). In the first embodiment, the cross-sectional shape of the strand of the coil spring W is a circle. Examples of the coating material include a thermosetting resin and a thermoplastic resin.

As illustrated in FIG. 1, the coating material application system 1 includes a coating material application device 2 and a control device 3. In the coating material application system 1, the coating material application device 2 operates under control by the control device 3, and thereby the coating material is applied to a specific position (a position of application) of the coil spring W. Here, the position of application is a portion where portions of the strand of the coil spring W come into contact with each other when the coil spring W is compressed. That is, contact damage between portions of the strand of the coil spring W at the position of application is alleviated by applying the coating material to the position of application.

### [Configuration of the coating material application device]

First, the configuration of the coating material application device 2 is described.

In the description of the configuration of the coating material application device 2, an axis along the vertical direction (the up-down direction of FIG. 1) is defined as a Z-axis (FIG. 1), and one of two axes orthogonal to the Z-axis (an axis along the left-right direction of FIG. 1) is defined as a Y-axis (FIG. 1).

As illustrated in FIG. 1, the coating material application device 2 includes a support base 4, a sensor 5, a first movement device 6, a dispenser 7, and a second movement device 8.

As illustrated in FIG. 1, the support base 4 supports the coil spring W. Specifically, the coil spring W is placed on the support base 4 in a posture in which the center axis of the coil spring W follows the Z-axis. The support base 4 includes a servomotor, etc., and is configured to be rotatable about a specific axis Ax (FIG. 1) following the center axis of the coil spring W under control by the control device 3. In the first embodiment, the specific axis Ax is an axis parallel to the Z-axis.

The sensor 5 measures a position of the strand of the coil spring W under control by the control device 3. In the first embodiment, the sensor 5 is configured by using a laser sensor. More specifically, the sensor 5 emits laser light linearly along the YZ plane from a direction inclined by 45° with respect to the Y-axis and the Z-axis. The sensor 5 is configured to receive the laser light reflected from the strand of the coil spring W with an imaging element such as a complementary metal oxide semiconductor (CMOS) and thereby be able to measure a profile of an arc-shaped part of the strand that has reflected the linear laser light. The sensor 5 outputs a measurement value obtained by measuring the position of the strand of the coil spring W to the control device 3. The inclination angle of the sensor 5 with respect to the Y-axis and the Z-axis is not limited to 45°, and may be other inclination angles.

The first movement device 6 supports the sensor 5, and moves the sensor 5. As illustrated in FIG. 1, the first movement device 6 includes a slider 61 that supports the sensor 5, a guide rail 62 extending along the Z-axis, a servomotor (not illustrated), etc. In the first movement device 6, the slider 61 moves on the guide rail 62 along the Z-axis under control by the control device 3. That is, in the first embodiment, the first movement device 6 moves the sensor 5 only along the specific axis Ax.

The dispenser 7 corresponds to an application device according to the present invention, and applies the coating material to the coil spring W under control by the control device 3. The application device according to the present invention is not limited to the dispenser 7, and may be other application devices.

The second movement device 8 supports the dispenser 7, and moves the dispenser 7. As illustrated in FIG. 1, the second movement device 8 includes a slider 81 that supports the dispenser 7, a guide rail 82 extending along the Y-axis, a guide rail 83 extending along the Z-axis, a servomotor (not illustrated), etc. In the second movement device 8, under control by the control device 3, the slider 81 moves on the guide rail 82 along the Y-axis, and the guide rail 82 moves on the guide rail 83 along the Z-axis. That is, in the first embodiment, the second movement device 8 moves the dispenser 7 only along the specific axis Ax and the Y-axis.

### [With regard to the positional relationship between the sensor and the dispenser]

Next, the positional relationship between the sensor 5 and the dispenser 7 described above is described.

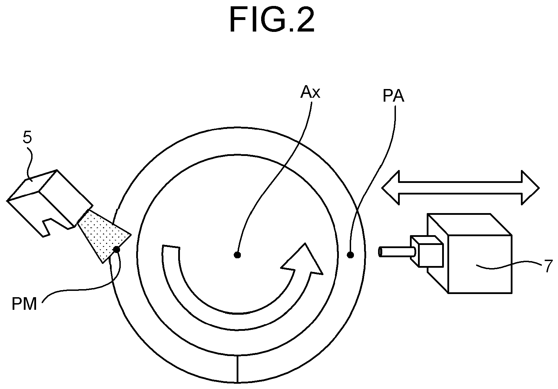

FIG. 2 is a diagram describing a positional relationship between the sensor 5 and the dispenser 7. Specifically, FIG. 2 is a diagram of the sensor 5 and the dispenser 7 as viewed from above along the Z-axis.

As illustrated in FIG. 2, a position of measurement PM of a position of the strand of the coil spring W by the sensor 5 and a position of application PA of the coating material to the coil spring W by the dispenser 7 are shifted from each other by a specific angle about the specific axis Ax.

Here, in the first embodiment, as described above, the sensor 5 emits linear laser light, and measures a profile of an arc-shaped part of the strand of the coil spring W that has reflected the linear laser light. Thus, the position of measurement PM corresponds to the position of the arc-shaped part. In the first embodiment, the specific angle is 180°. The specific angle is not limited to 180°, and may be other angles.

### [Configuration of the control device]

Next, the configuration of the control device 3 is described.

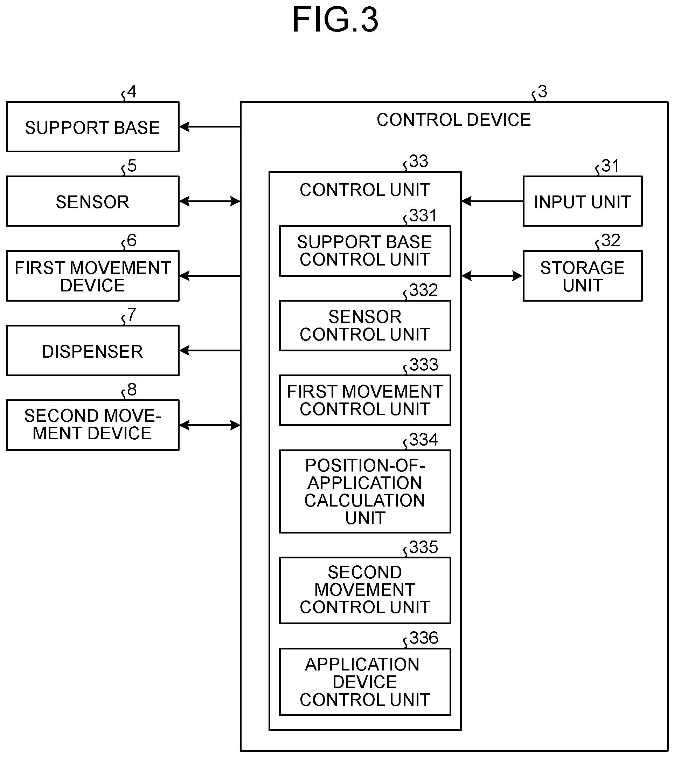

FIG. 3 is a block diagram illustrating a configuration of the control device 3.

The control device 3 controls the operation of the entire coating material application device 2. As illustrated in FIG. 3, the control device 3 includes an input unit 31, a storage unit 32, and a control unit 33.

The input unit 31 is composed of a button, a switch, a touch panel, etc. that accept a user operation, and outputs a signal according to the user operation to the control unit 33.

The storage unit 32 stores data, etc. necessary when the control unit 33 performs processing, in addition to various programs (including a control program according to the present invention) to be executed by the control unit 33.

The control unit 33 is implemented by a process in which various programs stored in the storage unit 32 are executed by a controller such as a central processing unit (CPU) or a micro processing unit (MPU), and controls the operation of the entire coating material application system 1. The control unit 33 is not limited to a CPU or an MPU, and may be configured by using an integrated circuit such as an application specific integrated circuit (ASIC) or a field-programmable gate array (FPGA). As illustrated in FIG. 3, the control unit 33 includes a support base control unit 331, a sensor control unit 332, a first movement control unit 333, a position-of-application calculation unit 334, a second movement control unit 335, and an application device control unit 336.

Detailed functions of the support base control unit 331, the sensor control unit 332, the first movement control unit 333, the position-of-application calculation unit 334, the second movement control unit 335, and the application device control unit 336 will be described in the "control method executed by the control device" described below.

### [Control method executed by the control device]

Next, a control method executed by the control device 3 is described.

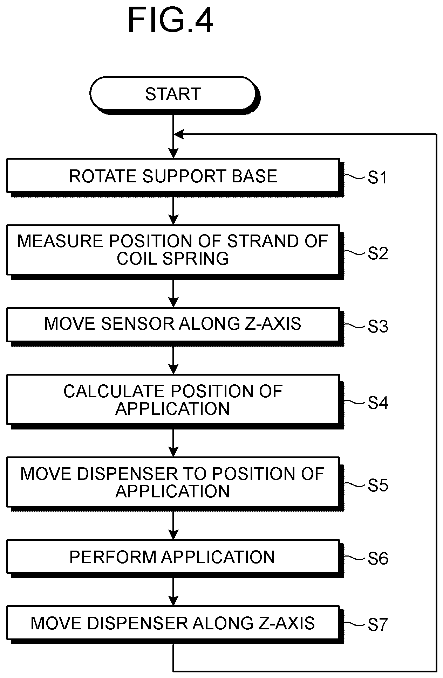

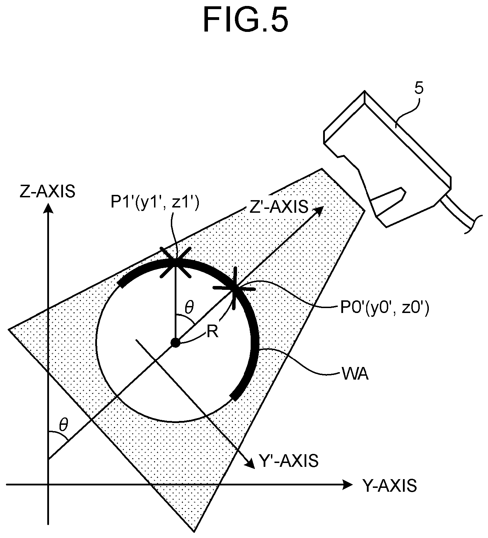

FIG. 4 is a flowchart illustrating a control method executed by the control device 3. FIG. 5 is a diagram describing steps S2 and S4. Specifically, FIG. 5 illustrates an emission region (the YZ plane) of linear laser light emitted from the sensor 5. In FIG. 5, the emission region of the laser light is represented by dots. The Y'-axis and the Z'-axis illustrated in FIG. 5 are coordinate axes (hereinafter, written as sensor coordinate axes) measured with the sensor 5. In the following, the coordinate axes of the Y-axis and the Z-axis are written as device coordinate axes in order to be distinguished from the sensor coordinate axes. In the first embodiment, as described above, the sensor 5 is installed to emit laser light linearly along the YZ plane from a direction inclined by 45° with respect to the Y-axis and the Z-axis. Therefore, as illustrated in FIG. 5, the Y'-axis and the Z'-axis are rotated by 45° with respect to the Y-axis and the Z-axis, respectively. The Z'-axis corresponds to the direction of laser light outputted from the sensor 5.

The operator sets the coil spring W, which is an application destination, on the support base 4. Then, the operator performs an application start operation on the input unit 31. Thereby, the control device 3 executes the control method described below.

First, the support base control unit 331 rotates the support base 4 about the specific axis Ax at a specific rotation speed (step S1: a support base control step).

Here, data indicating the specific rotation speed is stored in the storage unit 32. Then, in step S1, the support base control unit 331 reads out the data from the storage unit 32, and rotates the support base 4 at a rotation speed based on the data. The data is configured such that the value of the rotation speed can be changed by a user operation on the input unit 31.

After step S1, the sensor control unit 332 operates the sensor 5, and causes the sensor 5 to measure a position of the strand of the coil spring W. Then, the sensor control unit 332 acquires measurement values of the sensor 5 (step S2: a sensor control step).

Here, as described above, the sensor 5 is configured to be able to measure a profile of the strand of the coil spring W. Then, the sensor 5 outputs, as measurement values, position coordinates P0'(y0', z0') and a radius R described below (FIG. 5).

The position coordinates P0' (y0', z0') are the position coordinates on the sensor coordinate axes of the top point of an arc-shaped part WA (in FIG. 5, represented by a thick line) of the strand of the coil spring W that has reflected linear laser light outputted from the sensor 5.

The radius R is the radius of a virtual circle including the arc-shaped part WA.

After step S2, the first movement control unit 333 operates the first movement device 6, and moves the sensor 5 along the Z-axis at a specific movement speed (step S3: a first movement control step). For example, the sensor 5 is located in a position where the sensor 5 can measure the position of one end on the upper side of the strand of the coil spring W placed on the support base 4, and moves toward the lower side at the specific movement speed by step S3 being executed. Although in the first embodiment the sensor 5 is moved from the upper side toward the lower side and the coating material is applied from one end on the upper side to the other end on the lower side on the strand of the coil spring W, conversely the sensor 5 may be moved from the lower side toward the upper side and the coating material may be applied from the other end on the lower side to the one end on the upper side on the strand of the coil spring W.

Here, data indicating a distance by which the sensor 5 is moved along the Z-axis every time the support base 4 is rotated by, for example, 180° is stored in the storage unit 32. Then, in step S3, the first movement control unit 333 reads out the data from the storage unit 32, and moves the sensor 5 at a movement speed based on the data. The data is configured such that the value of the distance for movement can be changed by a user operation on the input unit 31.

After step S3, based on the measurement values of the sensor 5 acquired in step S2, the position-of-application calculation unit 334 calculates position coordinates P2(y, z) of the position of application of the coating material to the coil spring W (step S4: a position-of-application calculation step).

Specifically, first, based on the measurement values of the sensor 5 (the position coordinates P0'(y0', z0') and the radius R), the position-of-application calculation unit 334 uses Formula (1) below to calculate position coordinates P1'(y1', z1') of the position of application on the arc-shaped part WA. The position coordinates P1' (y1', z1') are the position coordinates on the sensor coordinate axes having the highest coordinate value in the Z-axis direction on the virtual circle including the arc-shaped part WA. In Formula (1), θ is an angle according to the installation position of the sensor 5, and is 45° in the first embodiment. The same applies to Formula (2) below.
(Math. 1)$\begin{matrix}y 1 ' = y 0 ' - R ⋅ sinθ \\ z 1 ' = z 0 ' - \left(R - R ⋅cosθ\right)\end{matrix}$ (1)

Next, the position-of-application calculation unit 334 uses Formula (2) below to convert the position coordinates P1'(y1', z1') on the sensor coordinate axes into position coordinates P1(y1, z1) on the device coordinate axes. Each of the set of position coordinates P1'(y1', z1') and the set of position coordinates P1(y1, z1) corresponds to a first set of position coordinates according to the present invention.
(Math. 2)$\begin{matrix}y 1 ' = y 0 ' - R ⋅ sinθ \\ z 1 ' = z 0 ' - \left(R - R ⋅cosθ\right)\end{matrix}$ (2)

Finally, the position-of-application calculation unit 334 calculates position coordinates P2(y2, z2) that are the result of rotation of the position coordinates P1(y1, z1) by 180° about the specific axis Ax (the Z-axis), and thus calculates the position coordinates P2(y2, z2) as a position of application. The set of position coordinates P2(y2, z2) corresponds to a second set of position coordinates according to the present invention.

After step S4, the second movement control unit 335 operates the second movement device 8, and moves the dispenser 7 to a position where the dispenser 7 is to be caused to apply the coating material to the position of application (the position coordinates P2(y2, z2)) (step S5: a second movement control step).

After step S5, the application device control unit 336 operates the dispenser 7 at an application timing at which the support base 4 is rotated by 180° about the specific axis Ax from the measurement timing, and causes the dispenser 7 to apply the coating material to the position of application (the position coordinates P2(y2, z2)) (step S6: an application device control step). The measurement timing is the timing at which in step S2 the sensor 5 measured a position of the strand of the coil spring W.

After step S6, the second movement control unit 335 operates the second movement device 8, and moves the dispenser 7 along the Z-axis at a specific movement speed (step S7). The specific movement speed is the same as the specific movement speed of the sensor 5 in step S3.

By repeatedly executing steps S1 to S7 above, the coating material is applied from one end to the other end on the strand of the coil spring W.

According to the first embodiment described hereinabove, the following effects are obtained.

In the coating material application system 1 according to the first embodiment, the control device 3 rotates the support base 4 about the specific axis Ax. Further, the control device 3 operates the sensor 5, and acquires measurement values of the sensor 5. Further, the control device 3 operates the first movement device 6, and moves the sensor 5. Based on the measurement values of the sensor 5, the control device 3 calculates the position of application of the coating material to the coil spring W. Then, the control device 3 moves the second movement device 8 to move the dispenser 7 to a position where the dispenser 7 is to be caused to apply the coating material to the position of application, and operates the dispenser 7 to cause the dispenser 7 to apply the coating material to the position of application.

Therefore, even in cases such as where the tolerance of the coil spring W is large, the position of application to the coil spring W does not deviate from the desired position, and the coating material can be applied to the coil spring W with high accuracy.

In the coating material application system 1 according to the first embodiment, the position of measurement of a position of the strand of the coil spring W by the sensor 5 and the position of application are shifted from each other by 180°, which is a specific angle, about the specific axis Ax.

Therefore, the installation positions of the sensor 5 and the dispenser 7 can be separated from each other. Therefore, in the coating material application system 1, the sensor 5, the dispenser 7, and the coil spring W can be easily installed, and a user-friendly coating material application system 1 can be obtained.

In the coating material application system 1 according to the first embodiment, the control device 3 calculates, based on measurement values of the sensor 5, a first set of position coordinates (position coordinates P1'(y1', z1') and position coordinates P1(y1, z1)) that is to be a position of application when rotation is made by 180° about the specific axis Ax. Further, the control device 3 calculates, as a position of application, a second set of position coordinates (position coordinates P2(y2, z2)) that is the result of rotation of the first set of position coordinates by 180° about the specific axis Ax. Then, the control device 3 causes the dispenser 7 to apply the coating material to the position of application at an application timing at which the support base 4 is rotated by 180° about the specific axis Ax from the timing of measurement by the sensor 5.

Therefore, the coating material can be appropriately applied to the position of application by, while taking into account the time it takes to calculate the first and second sets of position coordinates, setting the measurement timing and the application timing to be shifted from each other.

In the coating material application system 1 according to the first embodiment, the first movement device 6 is a movement device that moves the sensor 5 only along the Z-axis. On the other hand, the second movement device 8 is a movement device that moves the dispenser 7 only along the Z-axis and the Y-axis.

Therefore, the sensor 5 can be moved only with a minimum of one axis, and the dispenser 7 can be moved only with a minimum of two axes; thus, the configuration of the coating material application system 1 can be simplified.

In the coating material application system 1 according to the first embodiment, the position of application is a position where portions of the strand come into contact with each other when the coil spring W is compressed.

Therefore, contact damage between portions of the strand of the coil spring W at the position of application can be alleviated by applying the coating material to the position of application.

In the coating material application system 1 according to the first embodiment, the sensor 5 emits linear laser light and receives the laser light reflected from the strand of the coil spring W, and thereby measures a profile of a part of the strand that has reflected the linear laser light.

Therefore, a profile of the strand of the coil spring W can be easily acquired, and the position of application can be calculated with higher accuracy.

### (Second Embodiment)

Next, a second embodiment is described.

In the following description, similar configurations to those of the above-described first embodiment are denoted by the same reference numerals, and a detailed description thereof is omitted or simplified.

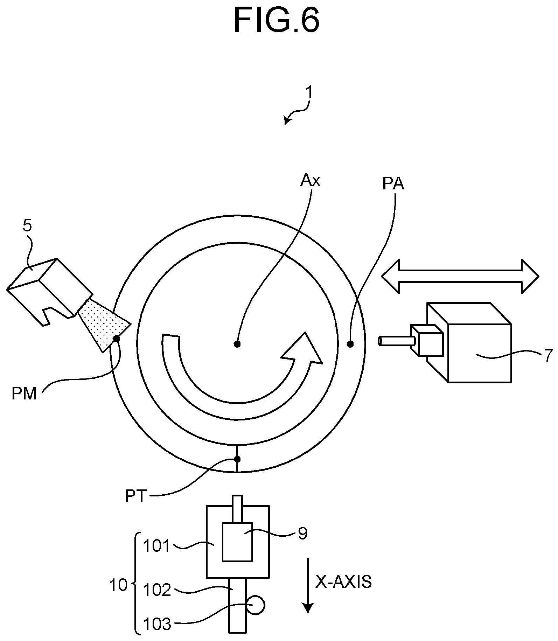

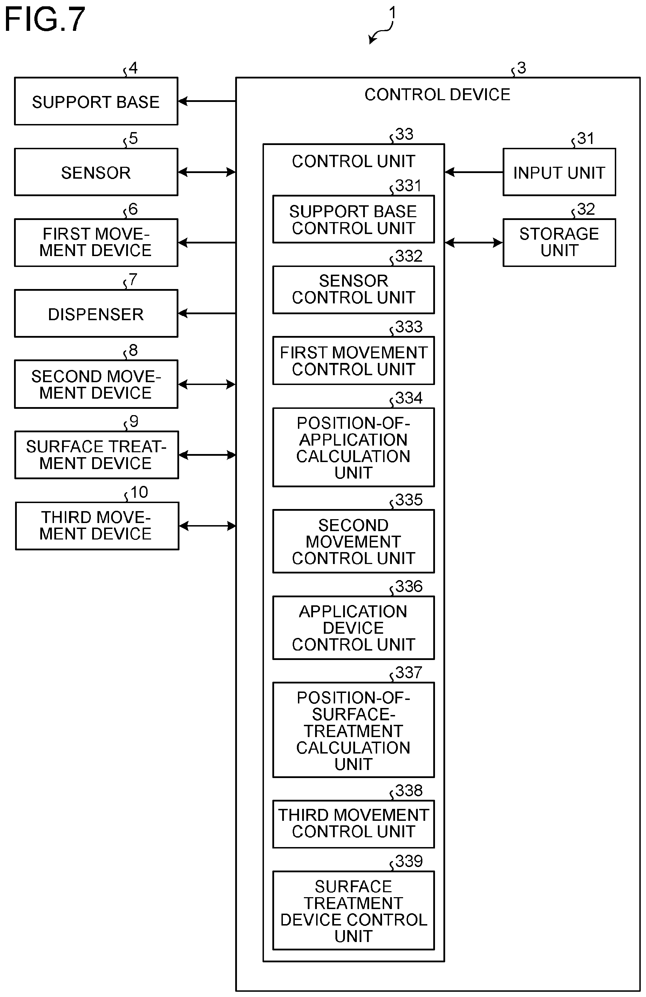

FIGS. 6 and 7 are diagrams describing a configuration of a coating material application system 1 according to the second embodiment. Specifically, FIG. 6 is a diagram corresponding to FIG. 2. FIG. 7 is a diagram corresponding to FIG. 3.

In the coating material application system 1 according to the second embodiment, as illustrated in FIGS. 6 and 7, a surface treatment device 9 and a third movement device 10 are added to the coating material application system 1 described in the above-described first embodiment.

The surface treatment device 9 performs surface treatment on the coil spring W under control by the control device 3. In the second embodiment, the surface treatment device 9 is configured by using a plasma treatment device that performs plasma treatment (surface treatment) on the coil spring W. The surface treatment performed by the surface treatment device 9 is not limited to plasma treatment, and may be blast treatment, primer treatment, or the like.

Here, as illustrated in FIG. 6, a position of surface treatment PT where surface treatment is performed on the coil spring W with the surface treatment device 9 is shifted from the position of measurement PM by a specific angle about the specific axis Ax. Similarly, the position of surface treatment PT is shifted from the position of application PA by a specific angle about the specific axis Ax. In the second embodiment, the position of surface treatment PT is shifted by 90° about the specific axis Ax with respect to the position of measurement PM and the position of application PA. More specifically, the position of surface treatment PT is, with respect to the position of application PA, shifted by 90° to the earlier stage in the rotation direction of the coil spring W (the support base 4) about the specific axis Ax. In other words, the position of surface treatment PT is, with respect to the position of measurement PM, shifted by 90° to the later side in the rotation direction of the coil spring W (the support base 4) about the specific axis Ax. The above angle is not limited to 90°, and may be other angles.

The third movement device 10 supports the surface treatment device 9, and moves the surface treatment device 9. As illustrated in FIG. 6, the third movement device 10 includes a slider 101 that supports the surface treatment device 9, a guide rail 102 extending along the X-axis orthogonal to the Z-axis and the Y-axis, a guide rail 103 extending along the Z-axis, a servomotor (not illustrated), etc. In the third movement device 10, under control by the control device 3, the slider 101 moves on the guide rail 102 along the X-axis, and the guide rail 102 moves on the guide rail 103 along the Z-axis. That is, in the second embodiment, the third movement device 10 moves the surface treatment device 9 only along the specific axis Ax and the X-axis.

In the coating material application system 1 according to the second embodiment, as illustrated in FIG. 7, functions of a position-of-surface-treatment calculation unit 337, a third movement control unit 338, and a surface treatment device control unit 339 are added to the control unit 33 to correspond the addition of the surface treatment device 9 and the third movement device 10.

Hereinbelow, detailed functions of the position-of-surface-treatment calculation unit 337, the third movement control unit 338, and the surface treatment device control unit 339 will now be described while a control method according to the second embodiment is described.

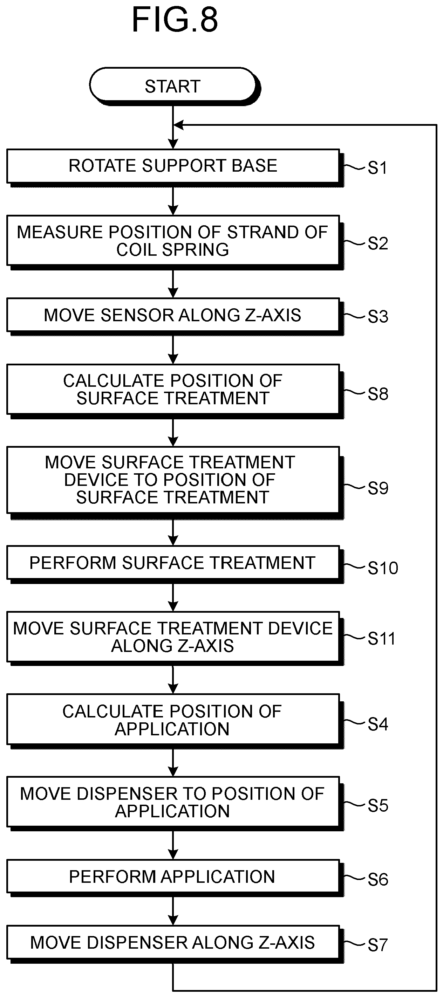

FIG. 8 is a flowchart illustrating a control method executed by the control device 3.

As illustrated in FIG. 8, the control method according to the second embodiment is different from the control method described in the above-described first embodiment in that steps S8 to S11 are added. Thus, in the following, steps S8 to S11 are mainly described.

Step S8 (a position-of-surface-treatment calculation step) is executed after step S3.

Specifically, in step S8, the position-of-surface-treatment calculation unit 337 calculates position coordinates P1(y1, z1) as described in the above-described first embodiment, then calculates position coordinates P3 that are the result of rotation of the position coordinates P1(y1, z1) by 90° about the specific axis Ax (the Z-axis), and thus calculates the position coordinates P3 as a position of surface treatment.

After step S8, the third movement control unit 338 operates the third movement device 10, and moves the surface treatment device 9 to a position where the surface treatment device 9 is to be caused to perform surface treatment on a surface position (the position coordinates P3) (step S9: a third movement control step).

After step S9, the surface treatment device control unit 339 operates the surface treatment device 9 at a surface treatment timing at which the support base 4 is rotated by 90° about the specific axis Ax from the measurement timing, and causes the surface treatment device 9 to perform surface treatment on the position of surface treatment (the position coordinates P3) (step S10: a surface treatment device control step). The measurement timing is the timing at which in step S2 the sensor 5 measured a position of the strand of the coil spring W.

After step S10, the third movement control unit 338 operates the third movement device 10, and moves the surface treatment device 9 along the Z-axis at a specific movement speed (step S11). The specific movement speed is the same as the specific movement speed of the sensor 5 in step S3. After that, the control device 3 proceeds to step S4.

According to the second embodiment described hereinabove, the following effects are obtained in addition to similar effects to those of the above-described first embodiment.

In the coating material application system 1 according to the second embodiment, the surface treatment device 9 and the third movement device 10 are used to perform surface treatment of the coil spring W before applying the coating material to the position of application. Therefore, the adhesion of the coating material to the position of application can be improved.

In the coating material application system 1 according to the second embodiment, since the surface treatment device 9 and the third movement device 10 are provided, the coating material can be applied while surface treatment is performed, and the adhesion of the coating material to the position of application can be efficiently improved. In the above-described first embodiment, also a configuration in which surface treatment of the coil spring W is performed with a device different from the coating material application system 1 and then a coating material is applied in the coating material application system 1 may be employed.

### (Other Embodiments)

Hereinabove, modes for implementing the present invention are described; however, the present invention should not be limited to the above-described first or second embodiment.

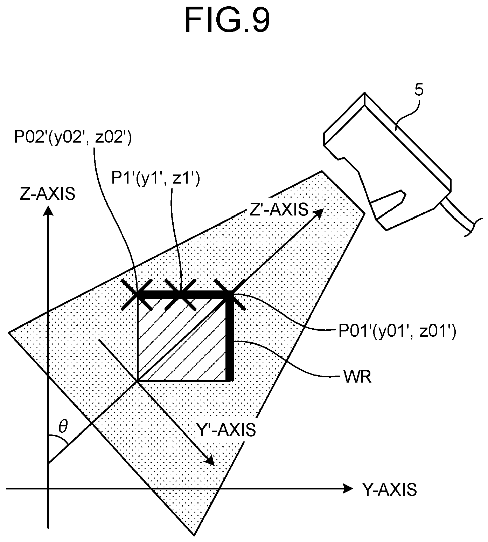

FIG. 9 is a diagram describing a modification example of the first and second embodiments. Specifically, FIG. 9 is a diagram corresponding to FIG. 5.

Although in the above-described first and second embodiments the cross-sectional shape of the strand of the coil spring W is a circle, the shape is not limited thereto, and may be other shapes, for example, a rectangular shape.

In the case where the cross-sectional shape of the coil spring W is a rectangular shape, the sensor 5 outputs, as measurement values, position coordinates on the sensor coordinate axes of a part WR (in FIG. 9, represented by a thick line) of the rectangular shape of the strand of the coil spring W that has reflected linear laser light outputted from the sensor 5. Here, in step S4, the control device 3 (the position-of-application calculation unit 334) extracts, based on the measurement values of the sensor 5, position coordinates P01'(y01', z01') and P02'(y02', z02') of the two edges having higher coordinate values in the Z-axis direction on the part WR of the rectangular shape (FIG. 9). Then, the control device 3 calculates, as position coordinates P1'(y1', z1'), a midpoint between the position coordinates P01'(y01', z01') and P02'(y02', z02') of the two edges (FIG. 9). After that, like in the above-described first and second embodiments, the control device 3 calculates position coordinates P1(y1, z1), P2(y2, z2), and P3 from the position coordinates P1' (y1', z1').

Although in the above-described first and second embodiments the first movement device 6 moves the sensor 5 only with one axis of the Z-axis, the configuration is not limited thereto, and the sensor 5 may be configured to be movable in the Y-axis direction and/or the X-axis direction in addition to the Z-axis direction. Similarly, the second movement device 8 moves the dispenser 7 only with two axes of the Z-axis and the Y-axis, the configuration is not limited thereto, and the dispenser 7 may be configured to be movable in the X-axis direction in addition to the Z-axis direction and the Y-axis direction. Similarly, the third movement device 10 moves the surface treatment device 9 only with two axes of the Z-axis and the X-axis, the configuration is not limited thereto, and the surface treatment device 9 may be configured to be movable in the Y-axis direction in addition to the Z-axis direction and the X-axis direction.

### Reference Signs List

- 1: COATING MATERIAL APPLICATION SYSTEM
- 2: COATING MATERIAL APPLICATION DEVICE
- 3: CONTROL DEVICE
- 4: SUPPORT BASE
- 5: SENSOR
- 6: FIRST MOVEMENT DEVICE
- 7: DISPENSER
- 8: SECOND MOVEMENT DEVICE
- 9: SURFACE TREATMENT DEVICE
- 10: THIRD MOVEMENT DEVICE
- 31: INPUT UNIT
- 32: STORAGE UNIT
- 33: CONTROL UNIT
- 61: SLIDER
- 62: GUIDE RAIL
- 81: SLIDER
- 82, 83: GUIDE RAIL
- 101: SLIDER
- 102, 103: GUIDE RAIL
- 331: SUPPORT BASE CONTROL UNIT
- 332: SENSOR CONTROL UNIT
- 333: FIRST MOVEMENT CONTROL UNIT
- 334: POSITION-OF-APPLICATION CALCULATION UNIT
- 335: SECOND MOVEMENT CONTROL UNIT
- 336: APPLICATION DEVICE CONTROL UNIT
- 337: POSITION-OF-SURFACE-TREATMENT CALCULATION UNIT
- 338: THIRD MOVEMENT CONTROL UNIT
- 339: SURFACE TREATMENT DEVICE CONTROL UNIT
- Ax: SPECIFIC AXIS
- PA: POSITION OF APPLICATION
- PM: POSITION OF MEASUREMENT
- PT: POSITION OF SURFACE TREATMENT
- W: COIL SPRING
- WA: ARC-SHAPED PART

## Claims

1. A coating material application system (1) comprising:
a support base (4) configured to support a coil spring (W), the support base being rotatable about a specific axis (Ax) following a center axis of the coil spring;
a sensor (5) configured to measure a position of a strand of the coil spring;
a first movement device (6) configured to support the sensor and move the sensor;
an application device (2) configured to apply a coating material to the coil spring;
a second movement device (8) configured to support the application device and move the application device; and
a control device (3) configured to control operations of the support base, the sensor, the first movement device, the application device and the second movement device, the control device including:
a support base control unit (331) configured to rotate the support base about the specific axis;
a sensor control unit (332) configured to operate the sensor and acquire a measurement value of the sensor;
a first movement control unit (333) configured to operate the first movement device and move the sensor;
a position-of-application calculation unit (334) configured to calculate, based on a measurement value of the sensor, a position of application of the coating material to the coil spring;
a second movement control unit (335) configured to operate the second movement device and move the application device to a position where the application device is caused to apply the coating material to the position of application; and
an application device control unit (336) configured to operate the application device and cause the application device to apply the coating material to the position of application,
**characterized in that**
the position-of-application calculation unit is configured to calculate, based on the measurement value of the sensor, a position where portions of the strand come into contact with each other when the coil spring is compressed as the position of application.

2. The coating material application system according to claim 1, wherein a position of measurement of a position of the strand of the coil spring by the sensor and the position of application are shifted from each other by a specific angle about the specific axis.

3. The coating material application system according to claim 2, wherein the specific angle is 180°.

4. The coating material application system according to claim 2 or 3, wherein the position-of-application calculation unit (334) is configured to
calculate, based on a measurement value of the sensor (5), a first set of position coordinates that is to be the position of application when rotation is made by the specific angle about the specific axis (Ax), and then
calculate, as the position of application, a second set of position coordinates that is a result of rotation of the first set of position coordinates by the specific angle about the specific axis.

5. The coating material application system according to claim 2 or 3, wherein the application device control unit (336) is configured to cause the application device (2) to apply the coating material to the position of application at an application timing at which the support base is rotated by the specific angle about the specific axis (Ax) from a timing of measurement of the position of the strand of the coil spring by the sensor (5).

6. The coating material application system according to claim 1, wherein
the first movement device (6) is a movement device configured to move the sensor (5) only along the specific axis (Ax), and
the second movement device (8) is a movement device configured to move the application device (2) only along the specific axis and an axis orthogonal to the specific axis.

7. The coating material application system according to claim 1, wherein the sensor (5) is configured to
emit linear laser light,
receive the laser light reflected from the strand of the coil spring (W), and
measure a profile of a part of the strand that has reflected the linear laser light.

8. The coating material application system according to claim 1, further comprising:
a surface treatment device (9) configured to perform surface treatment of the coil spring (W); and
a third movement device (10) configured to support the surface treatment device and move the surface treatment device,
wherein the control device (3) further includes:
a position-of-surface-treatment calculation unit (337) configured to calculate, based on a measurement value of the sensor (5), a position of surface treatment that is located at an earlier stage in a rotation direction of the coil spring about the specific axis than the position of application and where surface treatment is performed on the coil spring;
a third movement control unit (338) configured to operate the third movement device (10) and move the surface treatment device (339) to a position where the surface treatment device is caused to perform surface treatment of the position of surface treatment; and
a surface treatment device control unit (339) configured to operate the surface treatment device (9) and cause the surface treatment device to perform surface treatment of the position of surface treatment before applying the coating material to the position of application.

9. A control device (3) comprising:
a support base control unit (331) configured to rotate a support base about a specific axis (Ax) following a center axis of a coil spring (W), the support base being configured to support the coil spring;
a sensor control unit (332) configured to operate a sensor (5) and acquire a measurement value of the sensor, the sensor being configured to measure a position of a strand of the coil spring;
a first movement control unit (333) configured to operate a first movement device (6) and move the sensor (5), the first movement device being configured to support the sensor and move the sensor;
a position-of-application calculation unit (334) configured to calculate, based on a measurement value of the sensor, a position of application of a coating material to the coil spring;
a second movement control unit (335) configured to operate a second movement device and move an application device to a position where the application device is caused to apply the coating material to the position of application, the second movement device being configured to support the application device and move the application device, the application device being configured to apply the coating material to the coil spring; and
an application device control unit (336) configured to operate the application device and cause the application device to apply the coating material to the position of application,
**characterized in that**
the position-of-application calculation unit is configured to calculate, based on the measurement value of the sensor, a position where portions of the strand come into contact with each other when the coil spring is compressed as the position of application.

10. The control device according to claim 9, further comprising:
a position-of-surface-treatment calculation unit (337) configured to calculate, based on a measurement value of the sensor (5), a position of surface treatment that is located at an earlier stage in a rotation direction of the coil spring about the specific axis than the position of application and where surface treatment is performed on the coil spring;
a third movement control unit (338) configured to operate a third movement device (10) and move a surface treatment device (9) to a position where the surface treatment device is caused to perform surface treatment of the position of surface treatment, the third movement device being configured to support the surface treatment device and move the surface treatment device, the surface treatment device being configured to perform surface treatment of the coil spring; and
a surface treatment device control unit (339) configured to operate the surface treatment device (9) and cause the surface treatment device to perform surface treatment of the position of surface treatment before applying the coating material to the position of application.

11. A control method executed by a control device of a coating material application system, the control method comprising:
a support base control step of rotating a support base (4) about a specific axis (Ax) following a center axis of a coil spring, the support base being configured to support the coil spring (W);
a sensor control step of operating a sensor (5) and acquiring a measurement value of the sensor, the sensor being configured to measure a position of a strand of the coil spring;
a first movement control step of operating a first movement device (6) and moving the sensor (5), the first movement device being configured to support the sensor and move the sensor;
a position-of-application calculation step of calculating, based on a measurement value of the sensor, a position of application of a coating material to the coil spring;
a second movement control step of operating a second movement device (8) and moving an application device to a position where the application device is caused to apply the coating material to the position of application, the second movement device being configured to support the application device and move the application device, the application device being configured to apply the coating material to the coil spring; and
an application device control step of operating the application device and causing the application device to apply the coating material to the position of application, **characterized in that**
the position-of-application calculation step calculates, based on the measurement value of the sensor, a position where portions of the strand come into contact with each other when the coil spring is compressed as the position of application.

12. The control method according to claim 11, further comprising:
a position-of-surface-treatment calculation step of calculating, based on a measurement value of the sensor, a position of surface treatment that is located at an earlier stage in a rotation direction of the coil spring about the specific axis than the position of application and where surface treatment is performed on the coil spring;
a third movement control step of operating a third movement device (10) and moving a surface treatment device to a position where the surface treatment device is caused to perform surface treatment of the position of surface treatment, the third movement device being configured to support the surface treatment device and move the surface treatment device, the surface treatment device being configured to perform surface treatment of the coil spring; and
a surface treatment device control step of operating the surface treatment device (9) and causing the surface treatment device to perform surface treatment of the position of surface treatment before applying the coating material to the position of application.

13. A control program for causing a computer to execute:
a support base control step of rotating a support base (4) about a specific axis (Ax) following a center axis of a coil spring (W), the support base being configured to support the coil spring;
a sensor control step of operating a sensor (5) and acquiring a measurement value of the sensor, the sensor being configured to measure a position of a strand of the coil spring;
a first movement control step of operating a first movement device (6) and moving the sensor (5), the first movement device being configured to support the sensor and move the sensor;
a position-of-application calculation step of calculating, based on a measurement value of the sensor, a position of application of a coating material to the coil spring;
a second movement control step of operating a second movement device (8) and moving an application device to a position where the application device is caused to apply the coating material to the position of application, the second movement device being configured to support the application device and move the application device, the application device being configured to apply the coating material to the coil spring; and
an application device control step of operating the application device and causing the application device to apply the coating material to the position of application, **characterized in that**
the position-of-application calculation step calculates, based on the measurement value of the sensor, a position where portions of the strand come into contact with each other when the coil spring is compressed as the position of application.

14. The control program according to claim 13, wherein the program causes the computer to further execute:
a position-of-surface-treatment calculation step of calculating, based on a measurement value of the sensor (5), a position of surface treatment that is located at an earlier stage in a rotation direction of the coil spring about the specific axis than the position of application and where surface treatment is performed on the coil spring;
a third movement control step of operating a third movement device (10) and moving a surface treatment device to a position where the surface treatment device is caused to perform surface treatment of the position of surface treatment, the third movement device being configured to support the surface treatment device and move the surface treatment device, the surface treatment device being configured to perform surface treatment of the coil spring; and
a surface treatment device control step of operating the surface treatment device (9) and causing the surface treatment device to perform surface treatment of the position of surface treatment before applying the coating material to the position of application.

## Patentansprüche

1. Beschichtungsmaterialauftragungssystem (1), umfassend:
eine Stützbasis (4), die ausgebildet ist, eine Schraubenfeder (W) zu stützen, wobei die Stützbasis um eine bestimmte Achse (Ax) drehbar ist, die entlang einer Mittelachse der Schraubenfeder verläuft;
einen Sensor (5), der ausgebildet ist, eine Position eines Federdrahts der Schraubenfeder zu messen;
eine erste Bewegungsvorrichtung (6), die ausgebildet ist, den Sensor zu stützen und den Sensor zu bewegen;
eine Auftragsvorrichtung (2), die ausgebildet ist, ein Beschichtungsmaterial auf die Schraubenfeder aufzutragen;
eine zweite Bewegungsvorrichtung (8), die ausgebildet ist, die Auftragsvorrichtung zu stützen und die Auftragsvorrichtung zu bewegen; und
eine Steuerungsvorrichtung (3), die ausgebildet ist, Vorgänge der Stützbasis, des Sensors, der ersten Bewegungsvorrichtung, der Auftragsvorrichtung und der zweiten Bewegungsvorrichtung zu steuern, wobei die Steuerungsvorrichtung einschließt:
eine Steuereinheit für die Stützbasis (331), die ausgebildet ist, die Stützbasis um die bestimmte Achse zu drehen;
eine Steuereinheit für den Sensor (332), die ausgebildet ist, den Sensor zu betreiben und einen Messwert des Sensors zu erfassen;
eine Steuereinheit für die erste Bewegungsvorrichtung (333), die ausgebildet ist, die erste Bewegungsvorrichtung zu betreiben und den Sensor zu bewegen;
eine Berechnungseinheit für die Auftragsposition (334), die ausgebildet ist, auf der Grundlage eines Messwerts des Sensors eine Auftragsposition des Beschichtungsmaterials auf die Schraubenfeder zu berechnen;
eine Steuereinheit für die zweite Bewegungsvorrichtung (335), die ausgebildet ist, die zweite Bewegungsvorrichtung zu betreiben und die Auftragsvorrichtung zu einer Position zu bewegen, an der die Auftragsvorrichtung veranlasst wird, das Beschichtungsmaterial auf die Auftragsposition aufzutragen; und
eine Steuereinheit für die Auftragsvorrichtung (336), die ausgebildet ist, die Auftragsvorrichtung zu betreiben und die Auftragsvorrichtung zu veranlassen, das Beschichtungsmaterial auf die Auftragsposition aufzutragen,
**dadurch gekennzeichnet, dass**
die Berechnungseinheit für die Auftragsposition ausgebildet ist, auf der Grundlage des Messwerts des Sensors eine Position, an der Abschnitte des Federdrahts miteinander in Kontakt kommen, wenn die Schraubenfeder komprimiert wird, als die Auftragsposition zu berechnen.

2. Beschichtungsmaterialauftragungssystem nach Anspruch 1, wobei eine Messposition einer Position des Federdrahts der Schraubenfeder durch den Sensor und die Auftragsposition um einen bestimmten Winkel um die bestimmte Achse gegeneinander versetzt sind.

3. Beschichtungsmaterialauftragungssystem nach Anspruch 2, wobei der bestimmte Winkel 180° ist.

4. Beschichtungsmaterialauftragungssystem nach Anspruch 2 oder 3, wobei die Berechnungseinheit für die Auftragsposition (334) ausgebildet ist
auf der Grundlage eines Messwerts des Sensors (5) einen ersten Satz von Positionskoordinaten zu berechnen, der die Auftragsposition sein soll, wenn eine Drehung um den bestimmten Winkel um die bestimmte Achse (Ax) vorgenommen wird, und dann
als die Auftragsposition einen zweiten Satz von Positionskoordinaten zu berechnen, der ein Ergebnis einer Drehung des ersten Satzes von Positionskoordinaten um den bestimmten Winkel um die bestimmte Achse ist.

5. Beschichtungsmaterialauftragungssystem nach Anspruch 2 oder 3, wobei die Steuereinheit für die Auftragsvorrichtung (336) ausgebildet ist, die Auftragsvorrichtung (2) zu veranlassen, das Beschichtungsmaterial zu dem Auftragszeitpunkt auf die Auftragsposition aufzutragen, zu dem die Stützbasis seit einem Zeitpunkt der Messung der Position des Federdrahts der Schraubenfeder durch den Sensor (5) um den bestimmten Winkel um die bestimmte Achse (Ax) gedreht wird.

6. Beschichtungsmaterialauftragungssystem nach Anspruch 1, wobei
die erste Bewegungsvorrichtung (6) eine Bewegungsvorrichtung ist, die ausgebildet ist, den Sensor (5) nur entlang der bestimmten Achse (Ax) zu bewegen, und
die zweite Bewegungsvorrichtung (8) eine Bewegungsvorrichtung ist, die ausgebildet ist, die Auftragsvorrichtung (2) nur entlang der bestimmten Achse und einer zu der bestimmten Achse orthogonalen Achse zu bewegen.

7. Beschichtungsmaterialauftragungssystem nach Anspruch 1, wobei der Sensor (5) ausgebildet ist
lineares Laserlicht auszusenden,
das von dem Federdraht der Schraubenfeder (W) reflektierte Laserlicht zu empfangen, und
ein Profil eines Teils des Federdrahts zu messen, der das lineare Laserlicht reflektiert hat.

8. Beschichtungsmaterialauftragungssystem nach Anspruch 1, weiter umfassend:
eine Oberflächenbehandlungsvorrichtung (9), die ausgebildet ist, eine Oberflächenbehandlung der Schraubenfeder (W) durchzuführen; und
eine dritte Bewegungsvorrichtung (10), die ausgebildet ist, die Oberflächenbehandlungsvorrichtung zu stützen und die Oberflächenbehandlungsvorrichtung zu bewegen,
wobei die Steuerungsvorrichtung (3) weiter einschließt:
eine Berechnungseinheit für die Oberflächenbehandlungsposition (337), die ausgebildet ist, auf der Grundlage von einem Messwert des Sensors (5) eine Oberflächenbehandlungsposition zu berechnen, die in einer Drehrichtung der Schraubenfeder um die bestimmte Achse vor der Auftragsposition liegt und an der eine Oberflächenbehandlung an der Schraubenfeder durchgeführt wird;
eine Steuereinheit für die dritte Bewegungsvorrichtung (338), die ausgebildet ist, die dritte Bewegungsvorrichtung (10) zu betreiben und die Oberflächenbehandlungsvorrichtung (339) zu einer Position zu bewegen, an der die Oberflächenbehandlungsvorrichtung veranlasst wird, eine Oberflächenbehandlung an der Oberflächenbehandlungsposition durchzuführen; und
eine Steuereinheit für die Oberflächenbehandlungsvorrichtung (339), die ausgebildet ist, die Oberflächenbehandlungsvorrichtung (9) zu betreiben und die Oberflächenbehandlungsvorrichtung zu veranlassen, eine Oberflächenbehandlung an der Oberflächenbehandlungsposition durchzuführen, bevor das Beschichtungsmaterial auf die Auftragsposition aufgetragen wird.

9. Steuerungsvorrichtung (3), umfassend:
eine Steuereinheit für die Stützbasis (331), die ausgebildet ist, eine Stützbasis um eine bestimmte Achse (Ax) zu drehen, die entlang einer Mittelachse einer Schraubenfeder (W) verläuft, wobei die Stützbasis ausgebildet ist, die Schraubenfeder zu stützen;
eine Steuereinheit für den Sensor (332), die ausgebildet ist, einen Sensor (5) zu betreiben und einen Messwert des Sensors zu erfassen, wobei der Sensor ausgebildet ist, eine Position eines Federdrahts der Schraubenfeder zu messen;
eine Steuereinheit für die erste Bewegungsvorrichtung (333), die ausgebildet ist, eine erste Bewegungsvorrichtung (6) zu betreiben und den Sensor (5) zu bewegen, wobei die erste Bewegungsvorrichtung ausgebildet ist, den Sensor zu stützen und den Sensor zu bewegen;
eine Berechnungseinheit für die Auftragsposition (334), die ausgebildet ist, auf der Grundlage eines Messwerts des Sensors eine Auftragsposition eines Beschichtungsmaterials auf die Schraubenfeder zu berechnen;
eine Steuereinheit für die zweite Bewegungsvorrichtung (335), die ausgebildet ist, eine zweite Bewegungsvorrichtung zu betreiben und eine Auftragsvorrichtung zu einer Position zu bewegen, an der die Auftragsvorrichtung veranlasst wird, das Beschichtungsmaterial auf die Auftragsposition aufzutragen, wobei die zweite Bewegungsvorrichtung ausgebildet ist, die Auftragsvorrichtung zu stützen und die Auftragsvorrichtung zu bewegen, wobei die Auftragsvorrichtung ausgebildet ist, das Beschichtungsmaterial auf die Schraubenfeder aufzutragen; und
eine Steuereinheit für die Auftragsvorrichtung (336), die ausgebildet ist, die Auftragsvorrichtung zu betreiben und die Auftragsvorrichtung zu veranlassen, das Beschichtungsmaterial auf die Auftragsposition aufzutragen,
**dadurch gekennzeichnet, dass**
die Berechnungseinheit für die Auftragsposition ausgebildet ist, auf der Grundlage des Messwerts des Sensors eine Position, an der Abschnitte des Federdrahts miteinander in Kontakt kommen, wenn die Schraubenfeder komprimiert wird, als die Auftragsposition zu berechnen.

10. Steuerungsvorrichtung nach Anspruch 9, weiter umfassend:
eine Berechnungseinheit für die Oberflächenbehandlungsposition (337), die ausgebildet ist, auf der Grundlage eines Messwerts des Sensors (5) eine Oberflächenbehandlungsposition zu berechnen, die in einer Drehrichtung der Schraubenfeder um die bestimmte Achse vor der Auftragsposition liegt und an der eine Oberflächenbehandlung an der Schraubenfeder durchgeführt wird;
eine Steuereinheit für die dritte Bewegungsvorrichtung (338), die ausgebildet ist, eine dritte Bewegungsvorrichtung (10) zu betreiben und eine Oberflächenbehandlungsvorrichtung (9) zu einer Position zu bewegen, an der die Oberflächenbehandlungsvorrichtung veranlasst wird, eine Oberflächenbehandlung an der Oberflächenbehandlungsposition durchzuführen, wobei die dritte Bewegungsvorrichtung ausgebildet ist, die Oberflächenbehandlungsvorrichtung zu stützen und die Oberflächenbehandlungsvorrichtung zu bewegen, wobei die Oberflächenbehandlungsvorrichtung ausgebildet ist, eine Oberflächenbehandlung der Schraubenfeder durchzuführen; und
eine Steuereinheit für die Oberflächenbehandlungsvorrichtung (339), die ausgebildet ist, die Oberflächenbehandlungsvorrichtung (9) zu betreiben und die Oberflächenbehandlungsvorrichtung zu veranlassen, eine Oberflächenbehandlung an der Oberflächenbehandlungsposition durchzuführen, bevor das Beschichtungsmaterial auf die Auftragsposition aufgetragen wird.

11. Steuerungsverfahren, das von einer Steuerungsvorrichtung eines Beschichtungsmaterialauftragungssystems ausgeführt wird, wobei das Steuerungsverfahren umfasst:
einen Steuerschritt für die Stützbasis des Drehens einer Stützbasis (4) um eine bestimmte Achse (Ax), die entlang einer Mittelachse einer Schraubenfeder verläuft, wobei die Stützbasis ausgebildet ist, die Schraubenfeder (W) zu stützen;
einen Steuerschritt für den Sensor des Betreibens eines Sensors (5) und des Erfassens eines Messwerts des Sensors, wobei der Sensor ausgebildet ist, eine Position eines Federdrahts der Schraubenfeder zu messen;
einen Steuerschritt für die erste Bewegungsvorrichtung des Betreibens einer ersten Bewegungsvorrichtung (6) und des Bewegens des Sensors (5), wobei die erste Bewegungsvorrichtung ausgebildet ist, den Sensor zu stützen und den Sensor zu bewegen;
einen Berechnungsschritt für die Auftragsposition des Berechnens, auf der Grundlage eines Messwerts des Sensors, einer Auftragsposition eines Beschichtungsmaterials auf die Schraubenfeder;
einen Steuerschritt für die zweite Bewegungsvorrichtung des Betreibens einer zweiten Bewegungsvorrichtung (8) und des Bewegens einer Auftragsvorrichtung zu einer Position, an der die Auftragsvorrichtung veranlasst wird, das Beschichtungsmaterial auf die Auftragsposition aufzutragen, wobei die zweite Bewegungsvorrichtung ausgebildet ist, die Auftragsvorrichtung zu stützen und die Auftragsvorrichtung zu bewegen, wobei die Auftragsvorrichtung ausgebildet ist, das Beschichtungsmaterial auf die Schraubenfeder aufzutragen; und
einen Steuerschritt für die Auftragsvorrichtung des Betreibens der Auftragsvorrichtung und des Veranlassens der Auftragsvorrichtung, das Beschichtungsmaterial auf die Auftragsposition aufzutragen, **dadurch gekennzeichnet, dass**
der Berechnungsschritt für die Auftragsposition auf der Grundlage von dem Messwert des Sensors eine Position, an der Abschnitte des Federdrahts miteinander in Kontakt kommen, wenn die Schraubenfeder komprimiert wird, als die Auftragsposition berechnet.

12. Steuerungsverfahren nach Anspruch 11, weiter umfassend:
einen Berechnungsschritt für die Oberflächenbehandlungsposition des Berechnens, auf der Grundlage eines Messwerts des Sensors, einer Oberflächenbehandlungsposition, die in einer Drehrichtung der Schraubenfeder um die bestimmte Achse vor der Auftragsposition liegt und an der eine Oberflächenbehandlung an der Schraubenfeder durchgeführt wird;
einen Steuerschritt für die dritte Bewegungsvorrichtung des Betreibens einer dritten Bewegungsvorrichtung (10) und des Bewegens einer Oberflächenbehandlungsvorrichtung zu einer Position, an der die Oberflächenbehandlungsvorrichtung veranlasst wird, eine Oberflächenbehandlung an der Oberflächenbehandlungsposition durchzuführen, wobei die dritte Bewegungsvorrichtung ausgebildet ist, die Oberflächenbehandlungsvorrichtung zu stützen und die Oberflächenbehandlungsvorrichtung zu bewegen, wobei die Oberflächenbehandlungsvorrichtung ausgebildet ist, eine Oberflächenbehandlung der Schraubenfeder durchzuführen; und
einen Steuerschritt für die Oberflächenbehandlungsvorrichtung des Betreibens der Oberflächenbehandlungsvorrichtung (9) und des Veranlassens der Oberflächenbehandlungsvorrichtung, eine Oberflächenbehandlung an der Oberflächenbehandlungsposition durchzuführen, bevor das Beschichtungsmaterial auf die Auftragsposition aufgetragen wird.

13. Steuerungsprogramm zum Veranlassen eines Computers, Folgendes auszuführen:
einen Steuerschritt für die Stützbasis des Drehens einer Stützbasis (4) um eine bestimmte Achse (Ax), die entlang einer Mittelachse einer Schraubenfeder (W) verläuft, wobei die Stützbasis ausgebildet ist, die Schraubenfeder zu stützen;
einen Steuerschritt für den Sensor des Betreibens eines Sensors (5) und des Erfassens eines Messwerts des Sensors, wobei der Sensor ausgebildet ist, eine Position eines Federdrahts der Schraubenfeder zu messen;
einen Steuerschritt für die erste Bewegungsvorrichtung des Betreibens einer ersten Bewegungsvorrichtung (6) und des Bewegens des Sensors (5), wobei die erste Bewegungsvorrichtung ausgebildet ist, den Sensor zu stützen und den Sensor zu bewegen;
einen Berechnungsschritt für die Auftragsposition des Berechnens, auf der Grundlage eines Messwerts des Sensors, einer Auftragsposition eines Beschichtungsmaterials auf die Schraubenfeder;
einen Steuerschritt für die zweite Bewegungsvorrichtung des Betreibens einer zweiten Bewegungsvorrichtung (8) und des Bewegens einer Auftragsvorrichtung zu einer Position, an der die Auftragsvorrichtung veranlasst wird, das Beschichtungsmaterial auf die Auftragsposition aufzutragen, wobei die zweite Bewegungsvorrichtung ausgebildet ist, die Auftragsvorrichtung zu stützen und die Auftragsvorrichtung zu bewegen, wobei die Auftragsvorrichtung ausgebildet ist, das Beschichtungsmaterial auf die Schraubenfeder aufzutragen; und
einen Steuerschritt für die Auftragsvorrichtung des Betreibens der Auftragsvorrichtung und des Veranlassens der Auftragsvorrichtung, das Beschichtungsmaterial auf die Auftragsposition aufzutragen, **dadurch gekennzeichnet, dass**
der Berechnungsschritt für die Auftragsposition auf der Grundlage von dem Messwert des Sensors eine Position, an der Abschnitte des Federdrahts miteinander in Kontakt kommen, wenn die Schraubenfeder komprimiert wird, als die Auftragsposition berechnet.

14. Steuerungsprogramm nach Anspruch 13, wobei das Programm den Computer weiter veranlasst, Folgendes auszuführen:
einen Berechnungsschritt für die Oberflächenbehandlungsposition des Berechnens, auf der Grundlage eines Messwerts des Sensors (5), einer Oberflächenbehandlungsposition, die in einer Drehrichtung der Schraubenfeder um die bestimmte Achse vor der Auftragsposition liegt und an der eine Oberflächenbehandlung an der Schraubenfeder durchgeführt wird;
einen Steuerschritt für die dritte Bewegungsvorrichtung des Betreibens einer dritten Bewegungsvorrichtung (10) und des Bewegens einer Oberflächenbehandlungsvorrichtung zu einer Position, an der die Oberflächenbehandlungsvorrichtung veranlasst wird, eine Oberflächenbehandlung an der Oberflächenbehandlungsposition durchzuführen, wobei die dritte Bewegungsvorrichtung ausgebildet ist, die Oberflächenbehandlungsvorrichtung zu stützen und die Oberflächenbehandlungsvorrichtung zu bewegen, wobei die Oberflächenbehandlungsvorrichtung ausgebildet ist, eine Oberflächenbehandlung der Schraubenfeder durchzuführen; und
einen Steuerschritt für die Oberflächenbehandlungsvorrichtung des Betreibens der Oberflächenbehandlungsvorrichtung (9) und des Veranlassens der Oberflächenbehandlungsvorrichtung, eine Oberflächenbehandlung an der Oberflächenbehandlungsposition durchzuführen, bevor das Beschichtungsmaterial auf die Auftragsposition aufgetragen wird.

## Revendications

1. Système d'application de matériau de revêtement (1) comprenant :
une table de support (4) configurée pour supporter un ressort hélicoïdal (W), la table de support étant rotative autour d'un axe spécifique (Ax) suivant un axe central du ressort hélicoïdal ;
un capteur (5) configuré pour mesurer une position d'un brin du ressort hélicoïdal ;
un premier dispositif de déplacement (6) configuré pour supporter le capteur et déplacer le capteur ;
un dispositif d'application (2) configuré pour appliquer un matériau de revêtement au ressort hélicoïdal ;
un deuxième dispositif de déplacement (8) configuré pour supporter le dispositif d'application et déplacer le dispositif d'application ; et
un dispositif de commande (3) configuré pour commander des opérations de la table de support, du capteur, du premier dispositif de déplacement, du dispositif d'application et du deuxième dispositif de déplacement, le dispositif de commande incluant :
une unité de commande de table de support (331) configurée pour faire tourner la table de support autour de l'axe spécifique ;
une unité de commande de capteur (332) configurée pour actionner le capteur et acquérir une valeur de mesure du capteur ;
une première unité de commande de déplacement (333) configurée pour actionner le premier dispositif de déplacement et déplacer le capteur ;
une unité de calcul de position d'application (334) configurée pour calculer, sur la base d'une valeur de mesure du capteur, une position d'application du matériau de revêtement au ressort hélicoïdal ;
une deuxième unité de commande de déplacement (335) configurée pour actionner le deuxième dispositif de déplacement et déplacer le dispositif d'application vers une position où le dispositif d'application est amené à appliquer le matériau de revêtement à la position d'application ; et
une unité de commande du dispositif d'application (336) configurée pour actionner le dispositif d'application et amener le dispositif d'application à appliquer le matériau de revêtement à la position d'application,
**caractérisé en ce que**
l'unité de calcul de position d'application est configurée pour calculer, sur la base de la valeur de mesure du capteur, en tant que position d'application, une position où des parties du brin entrent en contact les unes avec les autres lorsque le ressort hélicoïdal est comprimé.

2. Système d'application de matériau de revêtement selon la revendication 1, dans lequel une position de mesure d'une position du brin du ressort hélicoïdal par le capteur et la position d'application sont décalées l'une par rapport à l'autre d'un angle spécifique autour de l'axe spécifique.

3. Système d'application de matériau de revêtement selon la revendication 2, dans lequel l'angle spécifique est de 180°.

4. Système d'application de matériau de revêtement selon la revendication 2 ou la revendication 3, dans lequel l'unité de calcul de position d'application (334) est configurée pour
calculer, sur la base d'une valeur de mesure du capteur (5), un premier ensemble de coordonnées de position qui doit être la position d'application lorsqu'une rotation est effectuée selon l'angle spécifique autour de l'axe spécifique (Ax), puis
calculer, en tant que position d'application, un second ensemble de coordonnées de position qui est un résultat de la rotation du premier ensemble de coordonnées de position selon l'angle spécifique autour de l'axe spécifique.

5. Système d'application de matériau de revêtement selon la revendication 2 ou la revendication 3, dans lequel l'unité de commande de dispositif d'application (336) est configurée pour amener le dispositif d'application (2) à appliquer le matériau de revêtement à la position d'application à un moment d'application auquel la table de support est tournée selon l'angle spécifique autour de l'axe spécifique (Ax) à partir d'un moment de mesure de la position du brin du ressort hélicoïdal par le capteur (5).

6. Système d'application de matériau de revêtement selon la revendication 1, dans lequel
le premier dispositif de déplacement (6) est un dispositif de déplacement configuré pour déplacer le capteur (5) uniquement le long de l'axe spécifique (Ax), et
le deuxième dispositif de déplacement (8) est un dispositif de déplacement configuré pour déplacer le dispositif d'application (2) uniquement le long de l'axe spécifique et d'un axe orthogonal à l'axe spécifique.

7. Système d'application de matériau de revêtement selon la revendication 1, dans lequel le capteur (5) est configuré pour
émettre une lumière laser linéaire,
recevoir la lumière laser réfléchie depuis le brin du ressort hélicoïdal (W), et
mesurer un profil d'une partie du brin qui a réfléchi la lumière laser linéaire.

8. Système d'application de matériau de revêtement selon la revendication 1, comprenant en outre :
un dispositif de traitement de surface (9) configuré pour effectuer un traitement de surface du ressort hélicoïdal (W) ; et
un troisième dispositif de déplacement (10) configuré pour supporter le dispositif de traitement de surface et déplacer le dispositif de traitement de surface,
dans lequel le dispositif de commande (3) inclut en outre :
une unité de calcul de position de traitement de surface (337) configurée pour calculer, sur la base d'une valeur de mesure du capteur (5), une position de traitement de surface qui est située en amont dans le sens de rotation du ressort hélicoïdal autour de l'axe spécifique par rapport à la position d'application et où un traitement de surface est effectué sur le ressort hélicoïdal ;
une troisième unité de commande de déplacement (338) configurée pour actionner le troisième dispositif de déplacement (10) et déplacer le dispositif de traitement de surface (339) vers une position où le dispositif de traitement de surface est amené à effectuer un traitement de surface de la position de traitement de surface ; et
une unité de commande du dispositif de traitement de surface (339) configurée pour actionner le dispositif de traitement de surface (9) et amener le dispositif de traitement de surface à effectuer un traitement de surface de la position de traitement de surface avant d'appliquer le matériau de revêtement à la position d'application.

9. Dispositif de commande (3) comprenant :
une unité de commande de table de support (331) configurée pour faire tourner une table de support autour d'un axe spécifique (Ax) suivant un axe central d'un ressort hélicoïdal (W), la table de support étant configurée pour supporter le ressort hélicoïdal ;
une unité de commande de capteur (332) configurée pour actionner un capteur (5) et acquérir une valeur de mesure du capteur, le capteur étant configuré pour mesurer une position d'un brin du ressort hélicoïdal ;
une première unité de commande de déplacement (333) configurée pour actionner un premier dispositif de déplacement (6) et déplacer le capteur (5), le premier dispositif de déplacement étant configuré pour supporter le capteur et déplacer le capteur ;
une unité de calcul de position d'application (334) configurée pour calculer, sur la base d'une valeur de mesure du capteur, une position d'application d'un matériau de revêtement au ressort hélicoïdal ;
une deuxième unité de commande de déplacement (335) configurée pour actionner un deuxième dispositif de déplacement et déplacer un dispositif d'application vers une position où le dispositif d'application est amené à appliquer le matériau de revêtement à la position d'application, le deuxième dispositif de déplacement étant configuré pour supporter le dispositif d'application et déplacer le dispositif d'application, le dispositif d'application étant configuré pour appliquer le matériau de revêtement au ressort hélicoïdal ; et
une unité de commande du dispositif d'application (336) configurée pour actionner le dispositif d'application et amener le dispositif d'application à appliquer le matériau de revêtement à la position d'application,
**caractérisé en ce que**
l'unité de calcul de position d'application est configurée pour calculer, sur la base de la valeur de mesure du capteur, en tant que position d'application, une position où des parties du brin entrent en contact les unes avec les autres lorsque le ressort hélicoïdal est comprimé.

10. Dispositif de commande selon la revendication 9, comprenant en outre :
une unité de calcul de position de traitement de surface (337) configurée pour calculer, sur la base d'une valeur de mesure du capteur (5), une position de traitement de surface qui est située en amont dans le sens de rotation du ressort hélicoïdal autour de l'axe spécifique par rapport à la position d'application et où un traitement de surface est effectué sur le ressort hélicoïdal ;
une troisième unité de commande de déplacement (338) configurée pour actionner un troisième dispositif de déplacement (10) et déplacer un dispositif de traitement de surface (9) vers une position où le dispositif de traitement de surface est amené à effectuer un traitement de surface de la position de traitement de surface, le troisième dispositif de déplacement étant configuré pour supporter le dispositif de traitement de surface et déplacer le dispositif de traitement de surface, le dispositif de traitement de surface étant configuré pour effectuer un traitement de surface du ressort hélicoïdal ; et
une unité de commande du dispositif de traitement de surface (339) configurée pour actionner le dispositif de traitement de surface (9) et amener le dispositif de traitement de surface à effectuer un traitement de surface de la position de traitement de surface avant d'appliquer le matériau de revêtement à la position d'application.

11. Procédé de commande exécuté par un dispositif de commande d'un système d'application de matériau de revêtement, le procédé de commande comprenant :
une étape de commande de la table de support consistant à faire tourner une table de support (4) autour d'un axe spécifique (Ax) suivant un axe central d'un ressort hélicoïdal, la table de support étant configurée pour supporter le ressort hélicoïdal (W) ;
une étape de commande de capteur consistant à actionner un capteur (5) et à acquérir une valeur de mesure du capteur, le capteur étant configuré pour mesurer une position d'un brin du ressort hélicoïdal ;
une première étape de commande de déplacement consistant à actionner un premier dispositif de déplacement (6) et à déplacer le capteur (5), le premier dispositif de déplacement étant configuré pour supporter le capteur et déplacer le capteur ;
une étape de calcul de position d'application consistant à calculer, sur la base d'une valeur de mesure du capteur, une position d'application d'un matériau de revêtement au ressort hélicoïdal ;
une deuxième étape de commande de déplacement consistant à actionner un deuxième dispositif de déplacement (8) et à déplacer un dispositif d'application vers une position où le dispositif d'application est amené à appliquer le matériau de revêtement à la position d'application, le deuxième dispositif de déplacement étant configuré pour supporter le dispositif d'application et déplacer le dispositif d'application, le dispositif d'application étant configuré pour appliquer le matériau de revêtement au ressort hélicoïdal ; et
une étape de commande de dispositif d'application consistant à actionner le dispositif d'application et à amener le dispositif d'application à appliquer le matériau de revêtement à la position d'application, **caractérisé en ce que**
l'étape de calcul de position d'application calcule, sur la base de la valeur de mesure du capteur, en tant que position d'application, une position où des parties du brin entrent en contact les unes avec les autres lorsque le ressort hélicoïdal est comprimé.

12. Procédé de commande selon la revendication 11, comprenant en outre :
une étape de calcul de position de traitement de surface consistant à calculer, sur la base d'une valeur de mesure du capteur, une position de traitement de surface qui est située en amont dans le sens de rotation du ressort hélicoïdal autour de l'axe spécifique par rapport à la position d'application et où un traitement de surface est effectué sur le ressort hélicoïdal ;
une troisième étape de commande de déplacement consistant à actionner un troisième dispositif de déplacement (10) et à déplacer un dispositif de traitement de surface vers une position où le dispositif de traitement de surface est amené à effectuer un traitement de surface de la position de traitement de surface, le troisième dispositif de déplacement étant configuré pour supporter le dispositif de traitement de surface et déplacer le dispositif de traitement de surface, le dispositif de traitement de surface étant configuré pour effectuer un traitement de surface du ressort hélicoïdal ; et
une étape de commande de dispositif de traitement de surface consistant à actionner le dispositif de traitement de surface (9) et à amener le dispositif de traitement de surface à effectuer un traitement de surface de la position de traitement de surface avant d'appliquer le matériau de revêtement à la position d'application.

13. Programme de commande pour amener un ordinateur à exécuter :
une étape de commande de la table de support consistant à faire tourner une table de support (4) autour d'un axe spécifique (Ax) suivant un axe central d'un ressort hélicoïdal (W), la table de support étant configurée pour supporter le ressort hélicoïdal ;
une étape de commande de capteur consistant à actionner un capteur (5) et à acquérir une valeur de mesure du capteur, le capteur étant configuré pour mesurer une position d'un brin du ressort hélicoïdal ;
une première étape de commande de déplacement consistant à actionner un premier dispositif de déplacement (6) et à déplacer le capteur (5), le premier dispositif de déplacement étant configuré pour supporter le capteur et déplacer le capteur ;
une étape de calcul de position d'application consistant à calculer, sur la base d'une valeur de mesure du capteur, une position d'application d'un matériau de revêtement au ressort hélicoïdal ;
une deuxième étape de commande de déplacement consistant à actionner un deuxième dispositif de déplacement (8) et à déplacer un dispositif d'application vers une position où le dispositif d'application est amené à appliquer le matériau de revêtement à la position d'application, le deuxième dispositif de déplacement étant configuré pour supporter le dispositif d'application et déplacer le dispositif d'application, le dispositif d'application étant configuré pour appliquer le matériau de revêtement au ressort hélicoïdal ; et
une étape de commande de dispositif d'application consistant à actionner le dispositif d'application et à amener le dispositif d'application à appliquer le matériau de revêtement à la position d'application, **caractérisé en ce que**
l'étape de calcul de position d'application calcule, sur la base de la valeur de mesure du capteur, en tant que position d'application, une position où des parties du brin entrent en contact les unes avec les autres lorsque le ressort hélicoïdal est comprimé.

14. Programme de commande selon la revendication 13, dans lequel le programme amène l'ordinateur à exécuter en outre :
une étape de calcul de position de traitement de surface consistant à calculer, sur la base d'une valeur de mesure du capteur (5), une position de traitement de surface qui est située en amont dans le sens de rotation du ressort hélicoïdal autour de l'axe spécifique par rapport à la position d'application et où un traitement de surface est effectué sur le ressort hélicoïdal ;
une troisième étape de commande de déplacement consistant à actionner un troisième dispositif de déplacement (10) et à déplacer un dispositif de traitement de surface vers une position où le dispositif de traitement de surface est amené à effectuer un traitement de surface de la position de traitement de surface, le troisième dispositif de déplacement étant configuré pour supporter le dispositif de traitement de surface et déplacer le dispositif de traitement de surface, le dispositif de traitement de surface étant configuré pour effectuer un traitement de surface du ressort hélicoïdal ; et
une étape de commande de dispositif de traitement de surface consistant à actionner le dispositif de traitement de surface (9) et à amener le dispositif de traitement de surface à effectuer un traitement de surface de la position de traitement de surface avant d'appliquer le matériau de revêtement à la position d'application.
